# EUROPEAN PATENT APPLICATION

(11) **EP 3 537 245 A1**
(43) Date of publication of application: **11.09.2019**
(21) Application number: 18189662.2
(22) Date of filing: 20.08.2018
(51) Int. Cl.: G05B 19/19

(54) **EDGING METHOD AND APPARATUS**

(30) Priority: 08.03.2018 CN 201810191129; 29.06.2018 WO PCT/CN2018/093803
(71) Applicant: Beijing Apollo Ding Rong Solar Technology Co., Ltd., Beijing 100176 (CN)
(72) Inventor: GAO, Junzhao, Beijing Economic-Technological Development Area, Beijing 100176 (CN); LIN, Jian, Beijing Economic-Technological Development Area, Beijing 100176 (CN); ZHU, Kai, Beijing Economic-Technological Development Area, Beijing 100176 (CN); QI, Weibin, Beijing Economic-Technological Development Area, Beijing 100176 (CN)
(74) Representative: Gill Jennings & Every LLP

(57) **Abstract**

An edging method is provided, comprising: in a grinding process to grind a workpiece having an edge to be ground by a grinding assembly, using a controller to acquire a first distance detected by a sensor, wherein the first distance is a distance from the sensor to a first position on the edge of the workpiece detected by the sensor; using the controller to determine a grinding feed amount at the first position according to the first distance; and when to use the grinding assembly to grind the edge at the first position, using the controller to regulate a position of the grinding assembly according to the grinding feed amount, so that a preset grinding depth is ground away at the first position on the edge. An edging apparatus is further provided.

## Description

### CROSS-REFERENCE TO RELATED APPLICATION

This application claims the benefit of priorities to China Patent Application No. 201810191129.3 titled "EDGING METHOD AND APPARATUS" and filed on March 08, 2018 and International Patent Application No. PCT/CN2018/093803 titled "EDGING METHOD AND APPARATUS" and filed on June 29, 2018, the contents of which are hereby incorporated by reference.

### FIELD

The present disclosure relates to electromechanical field, particularly to an edging method and an edging apparatus.

### BACKGROUND

A conventional edging method generally includes steps such as driving a grinding wheel of an edging apparatus to move along a guiding rail to grind an edge of a workpiece, during which the grinding wheel is moved along one fixed direction of the guiding rail. In the conventional edging method, if the grinding wheel cannot be accurately located, or a cutting-size difference occurs between the workpieces, a portion of the edge of the workpiece may be ground too much, and another portion of the edge of the workpiece may be ground too less, so that the workpiece would not be uniformly ground and the edging quality is decreased. When the non-uniform edging happens, the grinding wheel has to be manually adjusted to a suitable position to increase the edging accuracy, which is tedious and time-consuming, especially for a curved edge. In addition, a skilled worker is required to adjust the grinding wheel, and the edging apparatus needs to be shut down during the adjustment.

### SUMMARY

An object of the present disclosure is to provide an edging method and an edging apparatus.

One embodiment of an edging method, comprises:
providing an edging apparatus comprising at least one sensor configured to detect a distance from the sensor to the edge to be ground;
providing a workpiece having an edge to be ground;
setting a base value of the distance;
detecting a variation value, the variation value is a difference between a present distance from the sensor to the edge to be ground during grinding and the base value; and
regulating a grinding feed amount of the edging apparatus according to the variation value.

In one embodiment, the edging method further comprises: defining a base line according to an edge contour of the workpiece; detecting a base distance from the sensor to the base line when the edging apparatus contacts the base line; and setting the base distance as the base value.

In one embodiment, the variation value is zero if the present distance is equal to the base value; the variation value is a positive value if the detection value is greater than the base value; and the variation value is a negative value if the detection value is smaller than the base value.

In one embodiment, the grinding feed amount is equal to a sum of the variation value and a preset grinding depth.

In one embodiment, the edging apparatus is capable of moving along a first moving direction and a second moving direction during grinding, the first moving direction is a grinding depth direction of the edging apparatus to grind the workpiece, and the second direction is perpendicular to the first moving direction.

In one embodiment, the edging method further comprises: detecting a cumulative value of a working mileage of the edging apparatus during grinding; comparing the cumulative value of the working mileage to a threshold value reflecting a service life of the edging apparatus; and if the cumulative value of the working mileage is equal to or larger than the threshold value, giving a reminder to change the grinding assembly of the edging apparatus.

In one embodiment, the at least one sensor is fixedly disposed on the edging apparatus.

Another embodiment of an edging method, applied to an edging apparatus comprising a sensor, a grinding assembly, and a controller respectively electrically connected to the sensor and the grinding assembly, comprises:
in a grinding process to grind a workpiece having an edge to be ground by the grinding assembly, using the controller to acquire a first distance detected by the sensor, wherein the first distance is a distance from the sensor to a first position on the edge of the workpiece detected by the sensor;
using the controller to determine a grinding feed amount at the first position according to the first distance; and
when to use the grinding assembly to grind the edge at the first position, using the controller to regulate a position of the grinding assembly according to the grinding feed amount, so that a preset grinding depth is ground away at the first position on the edge.

In one embodiment, the grinding feed amount is equal to a sum of the first distance and a preset grinding depth.

In one embodiment, the edging apparatus further comprises:
using the controller to acquire a second distance detected by the sensor, wherein the second distance is a distance from the sensor to a second position on the edge, the edge is configured to be ground at the first position after being ground at the second position, and the first position is any position on the edge except for an initial grinding position;
wherein using the controller to determine a grinding feed amount at the first position according to the first distance comprises:
   using the controller to calculate a distance difference by subtracting the first distance from the second distance; and
   determining a variation value of the grinding feed amount at the first position relative to the second position according to the distance difference;
when to use the grinding assembly to grind the edge at the first position, using the controller to regulate a position of the grinding assembly according to the grinding feed amount comprises:
   when to use the grinding assembly to grind the edge at the first position, using the controller to control the grinding assembly to move a distance equal to the variation value of the grinding feed amount along a grinding depth direction of the workpiece.

One embodiment of an edging apparatus, configured to grind an edge of a workpiece, comprises:
a sensor, configured to detect a first distance from the sensor to a first position on the edge;
a controller electrically connected to the sensor, configured to acquire the first distance and determine a grinding feed amount at the first position; and
a grinding assembly electrically connected to the controller, configured to grind away a preset grinding depth at the first position according to the grinding feed amount.

In one embodiment, a detection range of the sensor is from about 3 mm to about 10 mm.

In one embodiment, the grinding assembly comprises:
a grinding wheel; and
a protection cover fixedly connected to the grinding wheel for protecting the grinding wheel;
wherein the sensor is fixed on an outer side of the protection cover.

In one embodiment, the edging apparatus is configured to be moved respectively along a grinding depth direction of the workpiece and a second direction perpendicular to the grinding depth direction.

In one embodiment, the sensor is disposed at a front end of the grinding assembly along the second direction.

In one embodiment, the edging apparatus further comprises:
a working mileage detector respectively electrically connected to the grinding assembly and the controller;
wherein the working mileage detector is configured to detect a cumulative value of a working mileage of the grinding assembly and transfer the cumulative value of the working mileage to the controller;
the controller is further configured to give a reminder to change the grinding assembly of the edging apparatus if the cumulative value of the working mileage is equal to or larger than a threshold value reflecting a service life of the grinding assembly.

In one embodiment, the sensor is further configured to detect a second distance from the sensor to a second position of the edge, wherein the edge is configured to be ground at the first position after being ground at the second position, the first position is any position on the edge except for an initial grinding position;
the controller is further configured to acquire the second distance from the sensor, calculate a distance difference by subtracting the first distance from the second distance, and determine a variation value of the grind feed amount at the first position relative to the first position; and
the grinding assembly is further configured to grind the workpiece according to the variation value of the grind feed amount.

In one embodiment, the sensor is a contact-type sensor or a non-contact sensor.

In one embodiment, the edging apparatus comprises:
a first grinding assembly comprising a first grinding wheel and a first protection cover fixedly connected to the first grinding wheel for protecting the first grinding wheel;
a second grinding assembly comprising a second grinding wheel and a second protection cover fixedly connected to the second grinding wheel for protecting the second grinding wheel;
a first sensor fixedly disposed on an outer side of the first protection cover and located at a front end of the first grinding wheel along a second direction perpendicular to a grinding depth direction of the workpiece; and
a second sensor fixedly disposed on an outer side of the second protection cover and located at a front end of the second grinding wheel along the second direction perpendicular to the grinding depth direction of the workpiece.

In the present disclosure, the workpiece can be ground by the grinding method according to an edge condition thereof, so that the edging uniformity of the workpiece is improved and the yield of edging is increased.

### BRIEF DESCRIPTION OF THE DRAWINGS

In order to make the technical solutions in the embodiments of the present disclosure more clear, the present disclosure will now be further described with reference to the accompanying drawings and embodiments. Apparently, the accompanying drawings only show some embodiments of the present disclosure, and a person skilled in the art may still derive other drawings from these accompanying drawings without any inventive efforts.
FIG. 1 is a flow chart of one embodiment of an edging method.
FIG. 2 is a schematic structural view of one embodiment of an edging apparatus.
FIG. 3 is a schematic structural view of another embodiment of an edging apparatus.
FIG. 4 is a flow chart of another embodiment of an edging method.

### DETAILED DESCRIPTION

In order to make the objects, technical solutions and advantages of the present disclosure to be understood more clearly, the present disclosure will be described in further details with the accompanying drawings. Apparently the embodiments described below are merely some of all the embodiments of the present disclosure instead of all the embodiments. Based on the embodiments of the present disclosure, all the other embodiments which can occur to a person skilled in the art without any inventive effort shall fall into the scope of the present disclosure.

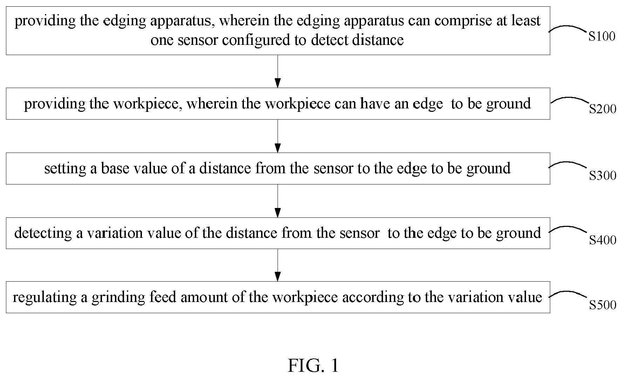

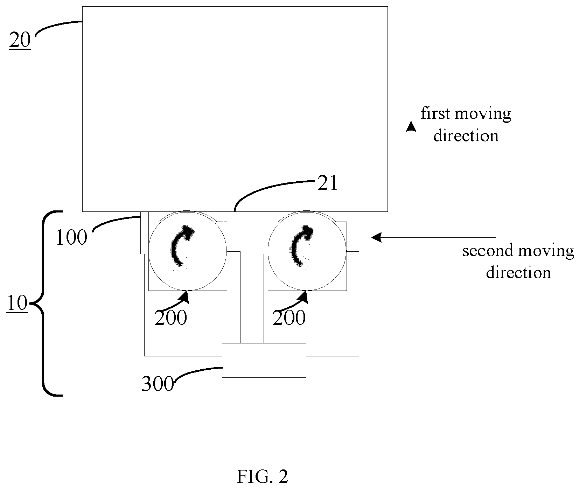

Referring to FIG. 1 and FIG. 2, an embodiment of an edging method for grinding a workpiece 20 by an edging apparatus 10 comprises:
S100, providing the edging apparatus 10, wherein the edging apparatus 10 can comprise at least one sensor 100 configured to detect distance;
S200, providing the workpiece 20, wherein the workpiece 20 can have an edge 21 to be ground;
S300, setting a base value of a distance from the sensor 100 to the edge 21 to be ground;
S400, detecting a variation value of the distance from the sensor 100 to the edge 21 to be ground; and
S500, regulating a grinding feed amount of the workpiece 20 according to the variation value.

In S100, the edging apparatus 10 is an apparatus that is configured to edge or grind an edge of a workpiece. The material of the workpiece is not limited. The sensor 100 can be fixedly disposed on the edging apparatus 10. The sensor 100 can be configured to detect a distance within a predetermined range. The edging apparatus 10 can be provided with one or a plurality of sensors 100 for accurately detecting an edge of the workpiece 20.

In S200, a type of the workpiece 20 is not limited and can be selected according to a type of the edging apparatus 10. The workpiece 20 can be a workpiece having an edge 21 to be ground, such as a glass plate, a solar photovoltaic module, and a semiconductor substrate. The edge 21 to be ground can be ground by the edging apparatus 10.

In S300, the base value of the distance from the sensor 100 to the edge 21 to be ground can be set before a grinding process begins. The edging apparatus 10 contacts a base line of the edge 21 to be ground when the distance reaches the base value. The base line can be a relatively straight portion of the edge 21 to be ground. The base value of the distance can be equal to a base distance from the sensor 100 to the base line when the edging apparatus 10 contacts the base line. The base value of the distance is not specifically limited. In one embodiment, the base value of the distance can be zero. In another embodiment, the base value of the distance can be greater than zero.

In S400, the variation value of the distance is a difference between a present distance from the sensor 100 to the edge 21 and the base value. The present distance from the sensor 100 to the edge 21 can be detected by the sensor 100, and a difference between the present distance and the base value can be calculated, for example, by the sensor 100. The present distance is a real-time distance detected by the sensor 100 during the moving of the edging apparatus 10. By detecting the variation value of the distance from the sensor 100 to the edge 21 to be ground before grinding, a processing precision can be improved, a processing speed can be increased, and a manual operation situation can be diminished. By regulating a grinding feed amount according to the variation value of the distance from the sensor 100 to the edge 21 to be ground, the entire grinding process can be regulated according to a contour variation of the edge 21 to be ground. The contour variation of the edge 21 to be ground can be reflected by the variation value of the distance that is sensed by the sensor 100. In one embodiment, the edge 21 to be ground may have a protrusion, a recess, or an oblique contour which can be detected by the sensor 100 and reflected by the variation value. The variation value can be a positive value, a negative value, or zero. In one embodiment, when the edge 21 to be ground has a recess or an inwardly inclined contour relative to the base line, the variation value is defined as a positive value because the distance between the sensor 100 and the edge 21 is increased. When the edge 21 of the workpiece 20 has a protrusion or outwardly inclined contour relative to the base line, the variation value is defined as a negative value because the distance between the sensor 100 and the edge 21 is decreased. When the edge 21 of the workpiece 20 is a straight line aligned with the base line, the variation value is defined as zero.

In S500, the edging apparatus 10 can have an initial grinding state when it starts to work. During grinding, the variation value can be detected, and a grinding state of the edging apparatus 10 can be regulated according to the variation value. Referring to FIG. 2, in one embodiment, the edging apparatus 10 can have two moving directions, i.e. a first moving direction and a second moving direction. Every time when the edging apparatus 10 is moved a preset unit along the second moving direction, the variation value is updated once by the sensor 100. The detected variation value can be feedback to the edging apparatus 10. The grinding process can be regulated by the edging apparatus 10 according to the detected variation value. For example, the grinding feed amount along the first moving direction can be regulated according to the detected variation value, so that a preset grinding depth can be ground from the workpiece 20. The edging method can be applied to various types of workpiece.

The grinding feed amount refers to a distance that the edging apparatus 10 is moved along the first moving direction which is perpendicular to the base line when grinding the workpiece 20. The preset grinding depth, i.e. a preset grinding amount, refers to a depth to be removed from the workpiece 20 by grinding along a depth direction of the workpiece 20. In one embodiment, a depth of 2 mm needs to be ground away from the workpiece 20, and the preset grinding amount can be set as 2.

In one embodiment, the edging apparatus 10 includes at least one sensor 100 configured to detect distance. The workpiece 20 has the edge 21 to be ground. The variation value of the distance from the sensor 100 to the edge 21 to be ground is detected by the sensor 100. The grinding feed amount to the workpiece 20 is regulated according to the variation value. In the edging method, before processing the grinding, the variation value of the distance from the sensor 100 to the edge 21 to be ground is detected, so that the edge 21 to be ground of the workpiece 20 can be ground by the edging apparatus 10 according to a current edge condition, thereby improving the edging uniformity and increasing the yield of edging.

When the base value of the distance is zero, the sensor 100 can contact the edge 21 to be ground. The sensor 100 can be a contact-type sensor, such as a mechanical sensor. The contact-type sensor can detect the variation value by using a mechanical contact principle. The sensor 100 needs to physically contact the edge 21 once it needs to detect the variation value. The contact-type sensor 100 can have a mechanical probe or an elastic contactor.

When the base value of the distance is greater than zero, the sensor 100 may not contact the edge 21 to be ground. The sensor 100 can be a non-contact sensor, such as a photoelectric sensor or a laser sensor. The sensor 100 can be a non-contact sensor which detects the variation value by using an optical feedback principle. A light or electrical detection signal can be sent to the edge 21 to be ground by the sensor 100, and the variation value can be obtained from a signal feedback to the photoelectric sensor or the laser sensor from the edge 21.

In one embodiment, S400 can comprise defining the base line of the edge 21 to be ground according to a shape of the workpiece 20.

It should be understood that the base line can be an imaginary line. The baseline can be a reference standard. In one embodiment, the workpiece 20 is a photovoltaic glass with an edge needed to be ground smooth and straight. The baseline can be generated by a controller 300 or stored by an operator. In one embodiment, an edge state of the workpiece 20 can be obtained by the controller 300, and the base line can be generated according to the edge state.

Before grinding, the grinding base line of the photovoltaic glass can be previously defined, and the edge of the photovoltaic glass can be compared to the base line to decide which portion of the edge of the photovoltaic glass needs to be ground. For example, when the edge of the photovoltaic glass has a protrusion, the grinding feed amount can be determined by referring to the grinding base line of the photovoltaic glass and the preset grinding amount.

When the edge 21 to be ground coincides with the base line, the distance from the sensor 100 to the edge 21 to be ground detected by the sensor 100 has no change, and the variation value is zero.

When the edge 21 to be ground does not coincide with the base line, the distance is changed. If the distance from the sensor 100 to the edge 21 detected by the sensor 100 is greater than the base value, the variation value is a positive value. If the distance from the sensor 100 to the edge 21 detected by the sensor 100 is smaller than the base value, the variation value is a negative value.

In one embodiment, in S500, the grinding feed amount is equal to a sum of the variation value and the preset grinding amount (also refers to the preset grinding depth). In one embodiment, the sensor 100 is a contact-type sensor, and the base value of the distance is zero. The grinding feed amount can be directly equal to the sum of the variation value and the preset grinding amount.

In one embodiment, the grinding feed amount can be adjusted according to the variation value. The variation value reflects a variation of the distance from the sensor 100 to the edge 21 detected by the sensor 100. The variation value may be a positive value, a negative value, or zero. When the edge 21 of the workpiece 20 is always straight, the variation value of the distance detected by the sensor 100 at every moment is 0. In this case, the grinding feed amount is equal to the preset grinding amount. When the workpiece 20 has a recess, the variation value is a positive value, and the grinding feed amount can be equal to the sum of the variation value and the preset grinding amount. When the workpiece 20 has a protrusion, the variation value of the workpiece 20 is a negative value, and the grinding feed amount can be equal to the sum of the preset grinding amount and the negative variation value. In one embodiment, when it is detected that the edge 21 of the workpiece 20 has a recess with 2 mm depth, the grinding feed amount can have an increase of 2 mm based on the preset grinding amount. Thus, the entire edge 21 can be ground by the same grinding amount.

In one embodiment, the edging apparatus 10 can comprise at least one grinding assembly 200 to grind the workpiece 20. The grinding assembly 200 can comprise a grinding wheel. The edging method can further comprise a step of detecting a cumulative value of a working mileage of the edging apparatus 10 during grinding. When the cumulative value of the working mileage is equal to or larger than a preset threshold value, the grinding assembly 200 of the edging apparatus 10 needs to be changed. The preset threshold value can be a normal service life of the grinding assembly 200.

By monitoring the service life of the grinding assembly 200 through the cumulative value of the working mileage of the grinding assembly 200, a grinding accuracy in the grinding process can be ensured. In one embodiment, the service life of the grinding assembly 200 is about 6 kilometers, and the grinding assembly 200 can be changed after the cumulative value of the working mileage reaches 6 kilometers.

In one embodiment, the grinding process of the grinding assembly 200 can be controlled by a servo controller or a numerically controlled machine tool.

The control method of the grinding assembly 200 is not limited. In one embodiment, the grinding process of the grinding assembly 200 is controlled by the servo controller. In another embodiment, the grinding process of the grinding assembly 200 is controlled by the numerically controlled machine tool.

Referring to FIG. 2, in one embodiment, the grinding assembly 200 can have two moving directions. The grinding assembly 200 can be moved toward the workpiece 20 along the first moving direction to grind the workpiece 20. The first moving direction can be a depth direction or a feed direction of the workpiece 20. The grinding assembly 200 can be moved along the second moving direction to regulate a relative position of the grinding assembly 200 and the workpiece 20, so that the entire edge 21 can be sequentially ground by the grinding assembly 200. The second moving direction can be perpendicular to the first moving direction.

The grinding assembly 200 can be moved along the first moving direction and the second direction as shown in FIG. 2. When one portion of the edge 21 of the workpiece 20 is detected to be straight, the grinding process will not be changed. When one portion of the edge 21 of the workpiece 20 is detected to be not straight, the grinding process will be changed according to the variation value.

Referring to FIG.2, an embodiment of an edging apparatus 10 comprises at least one sensor 100, a controller 300, and at least one grinding assembly 200.

The at least one sensor 100 is configured to detect a variation value of an edge 21 to be ground of a workpiece 20. The controller 300 can be communicatively connected to the sensor 100 and can be configured to regulate a grinding process of the workpiece 20 according to the variation value. The at least one grinding assembly 200 can be communicatively connected to the controller 300 to grind the workpiece 20 according to the grinding process regulated by the controller 300.

In one embodiment, the sensor 100 can be a contact-type sensor, such as a mechanical sensor to contact the edge 21 of the workpiece 20. In another embodiment, the sensor 100 can be a non-contact sensor, such as a photoelectric sensor or a laser sensor.

In the second embodiment, the edging apparatus 10 comprises the at least one sensor 100, the controller 300, and the at least one grinding assembly 200. The variation value of the workpiece 20 can be obtained by using the sensor 100 to detect an edge contour of the workpiece 20. The grinding process of the workpiece 20 can be regulated according to the variation value by communicatively connecting the controller 300 and the sensor 100. The sensor 100 can be a high accuracy digital contact-type sensor which is capable of accurately detecting distance. The sensor 100 can be used to real-time detect the edge 21 of the workpiece 20, so that the grinding process can be real-time regulated and adjusted. The workpiece 20 can be ground by the grinding method according to an edge condition thereof, so that the edging uniformity of the workpiece 20 is improved and the yield of edging is increased.

In one embodiment, a detection range of the at least one sensor 100 can be from about 3 mm to about 10 mm, that is, a range that the sensor 100 is capable of detecting can be from about 3 mm to about 10 mm. Amounting position of the sensor 100 can be disposed according to the detection range. In one embodiment, the sensor 100 can be disposed at a position within a range about 6 mm away from the workpiece 20 when the grinding assembly 200 contact the edge 21, so that a wider range of the edge 21, such as a recess and protrusion situation of the edge 21, can be detected by the sensor 100.

In one embodiment, the grinding feed amount can be disposed by the controller 300. The grinding process can be controlled by the controller 300 according to the grinding feed amount. The grinding assembly 200 can be a grinding wheel. A servo motor can be used to accurately control the moving of the grinding wheel.

In one embodiment, the step of controlling the grinding process of the workpiece 20 by the controller 300 can comprise: providing a base line of the edge 21 to be ground according to the edge contour of the workpiece 20.

It should be understood that the base line can be an imaginary line. The baseline can be a reference standard. In one embodiment, the workpiece 20 is a photovoltaic glass with an edge needed to be ground smooth and straight. Before grinding, the grinding base line of the photovoltaic glass can be previously defined, and the edge of the photovoltaic glass can be compared to the base line to decide which portion of the edge of the photovoltaic glass needs to be ground. For example, when the edge of the photovoltaic glass has a protrusion, the grinding feed amount can be determined by referring to the grinding base line of the photovoltaic glass and the preset grinding amount.

When the edge 21 to be ground coincides with the base line, the distance from the sensor 100 to the edge 21 to be ground detected by the sensor 100 has no change, and the variation value is zero.

When the edge 21 to be ground does not coincide with the base line, the distance is changed. If a detection value of the distance from the sensor 100 to the edge 21 to be ground detected by the sensor 100 is greater than the base value, the variation value is a positive value. If the detection value of the distance from the sensor 100 to the edge 21 to be ground detected by the sensor 100 is smaller than the base value, the variation value is a negative value.

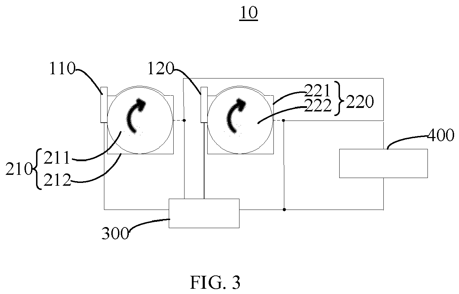

Referring to FIG. 3, the grinding apparatus 10 can further comprise at least one working mileage detector 400. The working mileage detector 400 can be respectively and electrically connected to the grinding assembly 200 and the controller 300.

The working mileage detector 400 is configured to detect a cumulative value of the working mileage of the grinding assembly 200 during grinding. The controller can be further configured to prompt the user to change the grinding assembly 200 when the cumulative value of the working mileage is greater than a preset threshold value. The preset threshold value can be a normal service life of the grinding assembly 200. By having the working mileage detector 400, the grinding apparatus 10 can be applied more safely and reliably, and an error caused by an abrasion of the grinding apparatus 10 can be decreased.

In one embedment, the edging apparatus 10 can comprise a first grinding assembly 210 and a second grinding assembly 220. The first grinding assembly 210 can comprise a first grinding wheel 211 and a first protection cover 212 fixedly connected to the first grinding wheel 211 for protecting the first grinding wheel 211.

The second grinding assembly 220 can comprise a second grinding wheel 221 and a second protection cover 222 fixedly connected to the second grinding wheel 221 for protecting the second grinding wheel 221.

The sensor 100 can comprise a first sensor 110 and a second sensor 120, by which it can be ensured that the distance is detected and feedback to the controller 300 before grinding. The first sensor 110 can be located in the second moving direction as shown in FIG. 2. The first sensor 110 can be disposed at a front end of the first grinding wheel 211 along the second moving direction. The first sensor 110 can be fixedly disposed on an outer side of the first protection cover 212. Therefore, it can be ensured that the distance is detected and feedback to the controller 300 before grinding. The second sensor 120 is located in the second moving direction as shown in FIG. 2. The second sensor 120 can be disposed at a front end of the second grinding wheel 221 along the second moving direction. The second sensor 120 can be fixedly disposed on an outer side of the second protection cover 222.

In the present embodiment, the sensor 100 comprises the first sensor 110 and the second sensor 120. Each of the first sensor 110 and the second sensor 120 is fixedly disposed on the protection cover of the grinding assembly 200. More specifically, the grinding assembly 200 comprises the first grinding assembly 210 and the second grinding assembly 220. The first grinding assembly 210 comprises the first grinding wheel 211 and the first protection cover 212. The second grinding assembly 220 comprises the second grinding wheel 221 and the second protection cover 222. The first sensor 110 is fixedly disposed on the outer side of the first protection cover 212. The second sensor 120 is fixedly disposed on the outer side of the second protection cover 222. By fixedly disposing the sensor 100 on an outer side of the protection cover of the grinding assembly 200, the edging apparatus can have advantages of simple structure and convenient operation and the dust generated in the grinding process can be prevented from spreading to the operator.

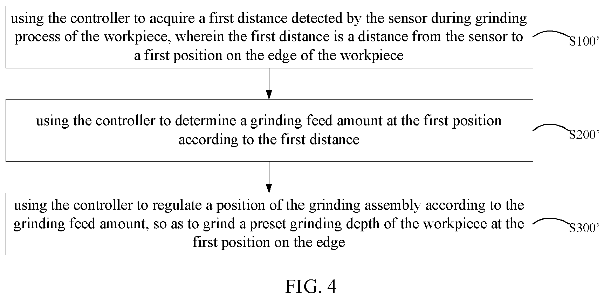

Referring to FIG. 4, another embodiment of the edging method by using the edging apparatus 10 is provided. The edging apparatus 10 can comprise a sensor 100, a grinding assembly 200, and a controller 300. The controller 300 can be respectively electrically connected to the sensor 100 and the controller 300. The edging method can comprise:

S100', using the controller 300 to acquire a first distance detected by the sensor 100 during grinding process of the workpiece 20, wherein the first distance is a distance from the sensor 100 to a first position on the edge 21 of the workpiece 20;

S200', using the controller 300 to determine a grinding feed amount at the first position according to the first distance; and

S300', using the controller 300 to regulate a position of the grinding assembly 200 according to the grinding feed amount, so as to grind a preset grinding depth of the workpiece 20 at the first position on the edge 21.

A detection accuracy of the sensor 100 can meet a predetermined condition. In one embodiment, the sensor 100 is configured to ignore burrs on the edge 21 to be ground.

It should be understood that the sensor 100, as well as the grinding assembly 200, will sequentially pass through a plurality of positions on the edge 21 to be ground to grind the edge 21. The first position can be any position on the edge 21 to be ground. The position on the edge 21 passed by the sensor 100 can be sequentially ground by the grinding assembly 200.

In one embodiment, a grinding depth can be preset in the controller 300 so as to obtain a preset grinding depth. A sum of the first distance and the preset grinding depth can be determined as the grinding feed amount at the first position.

In this embodiment, in the grinding process, the first distance from the sensor 100 to the first position on the edge 21 to be ground of the workpiece 20 can be detected firstly by the sensor 100. Then the grinding feed amount at the first position can be determined by the controller 30 according to the first distance. When to ground the edge 21 at the first position by using the grinding assembly 200, the controller 300 can control the position of the grinding assembly 200 according to the determined grinding feed amount, so that the edge 21 can be ground at the first position by the grinding assembly 200. In one embodiment, after that the edge 21 is ground at a second position by the grinding assembly 200 and begin to be ground at the first position, the position of the grinding assembly 200 can be regulated by the controller according to the grinding feed amount at the first position. The first position can be located next to the second position on the edge 21 along the second moving direction shown in FIG. 2.

In this embodiment, a preset grinding depth can be applied to the edge 21 without changing an original contour of the edge 21. In one embodiment, the first position can be any position on the edge 21 except an initial position at which the edging apparatus 10 contacts the edge 21 at first. In the present embodiment, the edge 21 of the workpiece 20 can be ground by the edging apparatus 10 according to a practical condition of the edge 21, thereby improving the edging uniformity and decreasing the edging fraction defective.

In one embodiment, the edging method can further comprise using the controller 300 to acquire a second distance detected by the sensor 300. The second distance can be a distance from the sensor 100 to a second position on the edge 21 of the workpiece 20. The first position can be located next to the second position on the edge 21 along the second moving direction shown in FIG. 2. In one embodiment, the edge 21 can be firstly ground at the second position by the grinding assembly 200, and then be ground at the first position by the grinding assembly 200. The first position can be any position on the edge 21 except an initial position at which the edging apparatus 10 contacts the edge 21.

In one embodiment, S200' can further comprise: using the controller 300 to calculate a distance difference by subtracting the first distance from the second distance. A variation value of the grinding feed amount at the first position relative to the second position can be determined according to the distance difference.

In one embodiment, the S300' can further comprise: using the controller 300 to control the grinding assembly 200 to move a distance equal to the variation value of the grinding feed amount along the first direction as shown in FIG. 2, so as to grind the preset grinding depth of the workpiece 20 at the first position on the edge 21.

In the present embodiment, the second distance from the sensor 100 to the second position on the edge 21 can be firstly detected by the sensor 100 and transferred to controller 300. Then the sensor 100 can be moved to a position corresponding to the first position to detect the first distance and transfer the first distance to the controller 300. Then the distance difference can be calculated by subtracting the first distance from the second distance through the controller 300. The variation value of the grinding feed amount at the first position relative to the second position can be determined according to the distance difference by the controller 300. In one embodiment, with respect to the protruded portion of the edge 21, if the distance detected by the sensor 200 is greater, the variation value of the grinding feed amount at the first position relative to the second position is equal to the distance difference; if the distance detected by the sensor 200 is smaller, the variation value of the grinding feed amount at the first position relative to the second position is equal to an absolute value of the distance difference. The preset grinding depth to the workpiece 20 at the first position can be obtained by the grinding assembly 200 according to the variation value of the grinding feed amount. In the present embodiment, the variation between the first distance and the second distance can be firstly detected by the sensor 100, then the variation value of the grinding feed amount can be obtained by the controller 300, and then the preset grinding depth to the workpiece 20 at different positions on the edge 21 can be performed by the grinding assembly 200. In the present embodiment, by using the sensor 100 to detect a line variation of the edge 21 to be ground and determining the variation value of the grinding feed amount at different positions on the edge 21 to be ground, the entire edge 21 can be ground corresponding to the preset grinding depth without changing the original shape of the edge 21.

In one embodiment, the edging method further comprises: detecting a cumulative value of a working mileage of the edging apparatus 10 during grinding. When the cumulative value of the working mileage is equal to or larger than a preset threshold value, it is suggested to change the grinding assembly 200 of the edging apparatus 10. The preset threshold value can be a normal service life of the grinding assembly 200.

By monitoring the service life of the grinding assembly 200 through the cumulative value of the working mileage of the grinding assembly 200, a grinding accuracy in the grinding process can be ensured. In one embodiment, the service life of the grinding assembly 200 is about 10 kilometers, and the grinding assembly 200 can be changed after the cumulative value of the working mileage reach 10 kilometers.

An embodiment of an edging apparatus 10, to grind a workpiece 20 having an edge 21 to be ground, comprises a sensor 100, a grinding assembly 200, and a controller 300.

The sensor 100 is configured to detect the first distance from the sensor 100 to the first position on the edge 21 to be ground.

The controller 300 is electrically connected to the sensor 100 to acquire the first distance and determine the grinding feed amount corresponding to the first position.

The grinding assembly 200 is electrically connected to the controller 300 to grind the workpiece 20 at the first position according to the grinding feed amount to achieve the preset grinding depth.

A structure of the edging apparatus 10 is not limited and can be designed according to needs. An application of the edging apparatus 10 can be referred to the edging method and need not be repeated here.

In one embodiment, the sensor 100 can be a non-contact sensor. The non-contact sensor can detect distance by using the light feedback principle. In one embodiment, the sensor 100 can be a contact-type sensor to detect distance by using mechanical contact principle. A detection range of the sensor 100 can be from about 3 mm to about 10 mm.

In one embodiment, the second distance from the sensor 100 to the second position on the edge 21 to be ground can be detected by the sensor 100. The second position can be located next to the first position along the second moving direction as shown in FIG. 2. The first position can be any position on the edge 21 to be ground except the initial position at which the edging apparatus start to contact the edge 21. The controller 300 can be configured to acquire the second distance from the sensor 100, calculating the distance difference by subtracting the first distance from the second distance, and determine the variation value of the grinding feed amount of the first position relative to the second position. The grinding assembly 200 can be configured to grind the workpiece 200 according to the variation value of the grinding feed amount. The application of the edging apparatus 10 can be referred to the described edging method and need not be repeated here.

It should be also noted that the relationship terminologies such as first and second are only used herein to distinguish an entity or operation from another entity or operation, and it is not necessarily required or implied that there are any actual relationship or order of this kind between those entities and operations. Moreover, the terminologies of "include", "including" and any other variants are intended to cover non-exclusive contains, so that the processes, methods, articles or devices including a series of elements not only include those elements but also include other elements that are not listed definitely or also include the elements inherent in the processes, methods, articles or devices. In the case of no more restrictions, the elements defined by the statement "include one ... " do not exclude that other same elements also exist in the processes, methods, articles or devices including the elements.

It should be noted that each embodiment in the specification is described in a progressive manner. Every embodiment illustrates in emphasis what is different from the other embodiments. The same or similar parts in the embodiments are just references to each other.

The description of the embodiments herein enables those skilled in the art to implement or use the present disclosure. Numerous modifications to the embodiments will be apparent to those skilled in the art, and the general principle herein can be implemented in other embodiments without deviation from the spirit or scope of the present disclosure. Therefore, the present disclosure will not be limited to the embodiments described herein, but in accordance with the widest scope consistent with the principle and novel features provided herein.

## Claims

1. An edging method, applied to an edging apparatus comprising a sensor, a grinding assembly, and a controller respectively electrically connected to the sensor and the grinding assembly, comprising:
in a grinding process to grind a workpiece having an edge to be ground by the grinding assembly, using the controller to acquire a first distance detected by the sensor, wherein the first distance is a distance from the sensor to a first position on the edge of the workpiece detected by the sensor;
using the controller to determine a grinding feed amount at the first position according to the first distance; and
when to use the grinding assembly to grind the edge at the first position, using the controller to regulate a position of the grinding assembly according to the grinding feed amount, so that a preset grinding depth is ground away at the first position on the edge.

2. The method of claim 1, wherein the grinding feed amount is equal to a sum of the first distance and a preset grinding depth.

3. The method of claim 1, further comprising:
using the controller to acquire a second distance detected by the sensor, wherein the second distance is a distance from the sensor to a second position on the edge, the edge is configured to be ground at the first position after being ground at the second position, and the first position is any position on the edge except for an initial grinding position;
wherein using the controller to determine a grinding feed amount at the first position according to the first distance comprises:
using the controller to calculate a distance difference by subtracting the first distance from the second distance; and
determining a variation value of the grinding feed amount at the first position relative to the second position according to the distance difference;
when to use the grinding assembly to grind the edge at the first position, using the controller to regulate a position of the grinding assembly according to the grinding feed amount comprises:
when to use the grinding assembly to grind the edge at the first position, using the controller to control the grinding assembly to move a distance equal to the variation value of the grinding feed amount along a grinding depth direction of the workpiece.

4. The edging method of any of claims 1 to 3, wherein the edging apparatus is capable of moving along a first moving direction and a second moving direction during grinding, the first moving direction is a grinding depth direction of the edging apparatus to grind the workpiece, and the second direction is perpendicular to the first moving direction.

5. The edging method of any one of claims 1 to 4, further comprising:
detecting a cumulative value of a working mileage of the edging apparatus during grinding; and
comparing the cumulative value of the working mileage to a threshold value reflecting a service life of the edging apparatus;
if the cumulative value of the working mileage is equal to or larger than the threshold value, giving a reminder to change the grinding assembly of the edging apparatus.

6. The edging method of claims 1 to 5, wherein the at least one sensor is fixedly disposed on the edging apparatus.

7. An edging apparatus, configured to grind an edge of a workpiece, comprising:
a sensor, configured to detect a first distance from the sensor to a first position on the edge;
a controller electrically connected to the sensor, configured to acquire the first distance and determine a grinding feed amount at the first position;
a grinding assembly electrically connected to the controller, configured to grind away a preset grinding depth at the first position according to the grinding feed amount.

8. The edging apparatus of claim 7, wherein a detection range of the sensor is from about 3 mm to about 10 mm.

9. The edging apparatus of any one of claims 7 to 8, wherein the edging apparatus is configured to be moved respectively along a grinding depth direction of the workpiece and a second direction perpendicular to the grinding depth direction.

10. The edging apparatus of any one claims 7 to 9, wherein the grinding assembly comprises:
a grinding wheel;
a protection cover fixedly connected to the grinding wheel for protecting the grinding wheel;
wherein the sensor is fixed on an outer side of the protection cover.

11. The edging apparatus of claim 10, wherein the sensor is disposed at a front end of the grinding assembly along the second direction.

12. The edging apparatus of any one of claims 7 to 11, further comprising:
a working mileage detector respectively electrically connected to the grinding assembly and the controller;
wherein the working mileage detector is configured to detect a cumulative value of a working mileage of the grinding assembly and transfer the cumulative value of the working mileage to the controller;
the controller is further configured to give a reminder to change the grinding assembly of the edging apparatus if the cumulative value of the working mileage is equal to or larger than a threshold value reflecting a service life of the grinding assembly.

13. The edging apparatus of any one of claims 7 to 12, wherein
the sensor is further configured to detect a second distance from the sensor to a second position of the edge, wherein the edge is configured to be ground at the first position after being ground at the second position, and the first position is any position on the edge except for an initial grinding position;
the controller is further configured to acquire the second distance from the sensor, calculate a distance difference by subtracting the first distance from the second distance, and determine a variation value of the grind feed amount at the first position relative to the first position;
the grinding assembly is further configured to grind the workpiece according to the variation value of the grind feed amount.

14. The edging apparatus of any one of claims 7 to 13, wherein the sensor is a contact-type sensor or a non-contact sensor.

15. The edging apparatus of any one of claims 7 to 14, comprising:
a first grinding assembly comprising a first grinding wheel and a first protection cover fixedly connected to the first grinding wheel for protecting the first grinding wheel;
a second grinding assembly comprising a second grinding wheel and a second protection cover fixedly connected to the second grinding wheel for protecting the second grinding wheel;
a first sensor fixedly disposed on an outer side of the first protection cover and located at a front end of the first grinding wheel along a second direction perpendicular to a grinding depth direction of the workpiece;
a second sensor fixedly disposed on an outer side of the second protection cover and located at a front end of the second grinding wheel along the second direction perpendicular to the grinding depth direction of the workpiece.
